# EUROPÄISCHE PATENTSCHRIFT

(11) **EP 4 311 426 B1**
(45) Veröffentlichungstag und Bekanntmachung des Hinweises auf die Patenterteilung: **18.02.2026**
(21) Anmeldenummer: 23186484.4
(22) Anmeldetag: 19.07.2023
(51) Int. Cl.: A01F 15/14

(54) **BINDEVORRICHTUNG FÜR EINE BALLENPRESSE**
BINDING DEVICE FOR A BALING PRESS
DISPOSITIF DE LIAGE POUR PRESSE À BALLES

(30) Priorität: 25.07.2022 DE 102022118534
(43) Veröffentlichungstag der Anmeldung: 31.01.2024
(73) Patentinhaber: Maschinenfabrik Bernard Krone GmbH & Co. KG, 48480 Spelle (DE)
(72) Erfinder: QUAST, David, 48431 Rheine (DE)

(56) Entgegenhaltungen:
- DE-B- 1 157 024
- US-A- 2 766 684
- US-A- 2 897 749
- US-A- 3 122 991
- US-A- 4 062 280

## Beschreibung

Die vorliegende Erfindung betrifft eine Bindevorrichtung für eine Ballenpresse nach dem Oberbegriff von Anspruch 1 sowie eine Ballenpresse nach dem Oberbegriff von Anspruch 13.

Ballenpressen werden in der Landwirtschaft eingesetzt, um Erntegut wie z.B. Heu oder Stroh, welches zuvor aufgenommen wurde, zu Ballen zu verpressen. Das Erntegut wird normalerweise durch eine Pick-up, die in die Ballenpresse integriert ist, vom Boden aufgenommen. Im Falle einer Quaderballenpresse erfolgt das Verpressen des aufgesammelten Ernteguts in zwei Stufen. Zunächst wird das von der Pick-up übernommene und ggf. durch eine Schneidvorrichtung geschnittene Erntegut durch eine Fördervorrichtung bzw. Sammelvorrichtung innerhalb einer Sammelkammer weitergefördert und dabei gerafft bzw. vorverdichtet. Der Sammelkammer ist eine Presskammer oder ein Presskanal nachgeordnet. Dort wirkt ein oszillierender Presskolben auf das Erntegut ein und führt das eigentliche Verpressen durch. Es wird somit vorverdichtetes Erntegut portionsweise in den Presskanal überführt, wo ein sukzessiver Aufbau des Quaderballens erfolgt.

Wenn der Quaderballen eine vorgesehene Größe erreicht hat, wird er mittels eines Bindematerials oder Bindemittels gebunden, bevor er ausgeworfen wird. Bei dem Bindemittel kann es sich z.B. um ein Garn oder ein thermoplastisches Band handeln. Im Zuge des Bindevorgangs wird ein Endbereich des Bindemittels an einem Ende des Ballens an dessen Oberseite festgehalten, wobei der Bindemittelstrang entlang der Oberseite zum gegenüberliegenden Ende, danach abwärts und anschließend in entgegengesetzter Richtung unterhalb des Ballens zurückgeführt wird. Ein sich anschließender Abschnitt des Bindemittelstrangs wird von einer Bindenadel geführt. Dabei sind eine Mehrzahl von Bindenadeln an einer Nadelschwinge befestigt, die gegenüber dem Presskanal beweglich angeordnet ist. Sie kann insbesondere von einer Position außerhalb des Presskanals in eine Position verstellt werden, in der die Bindenadeln aufwärts in den Presskanal hineinragen, wobei jede Bindenadel einen Bindemittelstrang mitführt. Dieser kann mit dem festgehaltenen Endbereich verbunden werden, entweder durch Verknoten oder durch Verschweißen, wodurch eine geschlossene Schleife um den Ballen gebildet ist. Diese kann vom restlichen Bindemittelstrang abgetrennt werden, wobei wiederum ein neu entstehender Endbereich festgehalten wird. Der Ballen kann ausgeworfen werden und eine neue Ballenbildung kann beginnen.

Die generell bestehenden Anforderungen an eine hohe Prozessgeschwindigkeit führen zu einer schnellen Bewegung der Nadelschwinge. Diese ist zwar antriebstechnisch gut realisierbar, birgt allerdings die Gefahr, dass sich die Nadelschwinge ungewollt über eine vorgesehene Endposition hinausbewegt, also gewissermaßen überschwingt, was zur Beschädigung der Nadelschwinge und/oder anderer Komponenten führen könnte. Daher ist es im Stand der Technik bekannt, eine Bremsvorrichtung einzusetzen, die eine permanente Bremskraft auf die Nadelschwinge ausübt. Diese kann das Überschwingen verhindern, erhöht aber die Belastung des Antriebs. Außerdem kann eine auf hohe Antriebsgeschwindigkeit abgestimmte Bremsvorrichtung dazu führen, dass die Nadelschwinge bei geringer Antriebsgeschwindigkeit ihre vorgesehenen Endpositionen nicht mehr erreichen kann. Um dies zu verhindern, muss die Antriebsleistung erhöht werden, was im Gegenzug eine Erhöhung der Bremskraft erfordern kann. Insgesamt wird also in erheblichem Maße Antriebsenergie benötigt, die nicht in Bewegungsenergie der Nadelschwinge umgesetzt wird, sondern an der Bremsvorrichtung verloren geht. Außerdem führt die Belastung der Bremsvorrichtung zu erhöhtem Verschleiß.

Bindevorrichtungen mit Bremsvorrichtung sind z.B. aus den folgenden Dokumenten bekannt: US 4 062 280 A, US 3 122 991 A, US 2 766 684 A, US 2 897 749 A und DE 11 57 024 B.

Aufgabe der Erfindung ist es, eine effiziente und präzise Führung einer Nadelschwinge zu ermöglichen.

Die Aufgabe wird gelöst mit einer Bindevorrichtung für eine Ballenpresse, mit den Merkmalen des unabhängigen Patentanspruchs 1. Vorteilhafte Ausführungsformen sind den abhängigen Ansprüchen entnehmbar.

Dafür wird eine Bindevorrichtung für eine Ballenpresse geschaffen, aufweisend eine Nadelschwinge mit einer Mehrzahl von Bindenadeln zum Zuführen eines Bindemittels in einen Presskanal, wobei die Nadelschwinge durch einen motorischen Antrieb derart antreibbar ist, dass sie sich entsprechend einem Bindezyklus relativ zu einem Rahmen der Ballenpresse bewegt, sowie aufweisend eine Bremsvorrichtung, die dazu eingerichtet ist, eine wenigstens indirekt auf die Nadelschwinge wirkende Bremskraft auszuüben.

Bei der Ballenpresse handelt es sich normalerweise um eine Quaderballenpresse oder Großpackenpresse. Die Ballenpresse kann selbstfahrend mit eigenem Fahrantrieb oder als Anhänger ohne eigenen Fahrantrieb ausgebildet sein. Sie weist einen Presskanal auf, in welchem die eigentliche Ballenformung und der Pressvorgang erfolgen. Der Presskanal weist eine Kanallängsachse auf, zu welcher er normalerweise überwiegend parallel verläuft. Die Kanallängsachse kann mit einer Längsachse der Ballenpresse übereinstimmen, sie kann aber auch gegenüber derselben geneigt sein. Typischerweise ist im Presskanal ein Presskolben angeordnet, der dazu eingerichtet ist, durch eine oszillierende Bewegung auf das Erntegut einzuwirken und es so zu verpressen. Hinsichtlich des Erntegutflusses ist dem Presskanal in der Regel eine Sammelkammer vorgeschaltet, in welcher eine Fördervorrichtung bzw. Sammelvorrichtung dazu eingerichtet ist, das Erntegut weiterzufördern und dabei vorzuverdichten.

Um die Form des fertigen Ballens zu sichern, wird er innerhalb des Presskanals mit einem Bindemittel versehen. Bei dem Bindemittel, welches auch als Bindematerial bezeichnet werden kann, kann es sich um ein Garn oder ein thermoplastisches Band handeln (z.B. aus PET). Es wird normalerweise in einer Mehrzahl von separaten Schleifen, die quer zur Kanallängsachse beabstandet sind, um den Ballen gelegt. Zur Bildung der jeweiligen Schleife wird ein Endbereich des Bindemittels, welcher an einem Ende des Ballens festgehalten wird, mit einem Abschnitt verbunden, der zu diesem Zweck von außen in den Presskanal geführt werden muss. Um den jeweiligen Abschnitt in den Presskanal zu führen, ist jeweils eine Bindenadel vorgesehen. Eine Nadelschwinge weist dabei eine Mehrzahl von Bindenadeln auf, die z.B. an einem gemeinsamen Träger befestigt sein können. Die Anzahl der Bindenadeln an der Nadelschwinge ist grundsätzlich nicht begrenzt, kann allerdings typischerweise zwischen zwei und acht liegen. Jede der Bindenadeln führt Bindemittel in den Presskanal, wobei die Zuführung normalerweise von einer Unterseite des Presskanals aus erfolgt. Die Nadelschwinge ist Teil der erfindungsgemäßen Bindevorrichtung, wobei die Bindevorrichtung allgemein Komponenten aufweisen kann, die direkt mit dem Bindevorgang in Zusammenhang stehen, aber auch Komponenten, die nicht oder nur indirekt am Bindevorgang beteiligt sind. Insofern ist der Begriff "Bindevorrichtung" nicht einschränkend auszulegen. Die Nadelschwinge ist durch einen motorischen Antrieb derart antreibbar, dass sie sich entsprechend einem Bindezyklus relativ zu einem Rahmen der Ballenpresse bewegt. Der motorische Antrieb weist wenigstens einen Motor auf, der bspw. als Verbrennungsmotor, Elektromotor, Hydraulikmotor oder in anderer Weise ausgebildet sein kann. Typischerweise ist genau ein Motor vorgesehen, so dass der motorische Antrieb auch als Motor bezeichnet werden kann.

Die Nadelschwinge ist durch den motorischen Antrieb antreibbar, wobei sie in aller Regel nicht unmittelbar an den jeweiligen Motor gekoppelt ist, sondern über verschiedene Elemente zur Kraftübertragung und/oder -umlenkung sowie ggf. zur Über- oder Untersetzung. Insbesondere kann auch vorgesehen sein, dass die Nadelschwinge zeitweise vom Antrieb entkoppelbar ist. Die Nadelschwinge ist gegenüber einem Rahmen der Ballenpresse beweglich gelagert, wobei sie normalerweise um eine in Querrichtung der Ballenpresse verlaufende Schwingenschwenkachse schwenkbar ist. Durch die Wirkung des motorischen Antriebs bewegt sich die Nadelschwinge entsprechend einem Bindezyklus. Dieser Bindezyklus entspricht normalerweise einer Bewegung aus einer Ausgangsposition, die einer ersten Totpunktlage entspricht, in eine Bindeposition, die einer zweiten Totpunktlage entspricht, gefolgt von einer Bewegung zurück in die Ausgangsposition. In der Bindeposition sind die Bindenadeln weitestmöglich in den Presskanal eingeführt. Bei der üblichen Anordnung der Nadelschwinge ist die erste Totpunktlage eine untere Totpunktlage und die zweite Totpunktlage eine obere Totpunktlage.

Die Bewegung der Nadelschwinge innerhalb des Bindezyklus weist verschiedene Beschleunigungsphasen und Verzögerungsphasen auf. Die notwendigen Verzögerungskräfte können teilweise z.B. vom motorischen Antrieb aufgenommen werden, was allerdings im Allgemeinen nicht ausreichend ist. Daher weist die Bindevorrichtung eine Bremsvorrichtung auf, die dazu eingerichtet ist, eine wenigstens indirekt auf die Nadelschwinge wirkende auszuüben. Normalerweise wird die Bremskraft durch Festkörperreibung erzeugt, wenngleich eine z.B. eine Erzeugung durch Flüssigkeitsreibung oder durch Wirbelströme zumindest ergänzend denkbar ist. Die Bremsvorrichtung kann eine Bremskraft entweder direkt auf die Nadelschwinge ausüben, so dass die Bremskraft direkt auf die Nadelschwinge wirkt. Alternativ kann die Bremskraft indirekt auf die Nadelschwinge wirken, was bedeutet, dass die Bremskraft an einem Bauteil erzeugt wird, welches mit der Nadelschwinge starr verbunden ist oder dessen Bewegung zumindest an die Bewegung der Nadelschwinge zwangsgekoppelt ist, so dass eine auf das entsprechende Bauteil wirkende Bremskraft zwangsläufig auch auf die Nadelschwinge wirkt. Allgemein kann man auch sagen, dass die Bremsvorrichtung dazu eingerichtet ist, eine die Nadelschwinge abbremsende Bremskraft auszuüben. Die Bremsvorrichtung kann eine einzige Bremse oder eine Mehrzahl von Bremsen aufweisen.

Erfindungsgemäß ist die Bindevorrichtung derart eingerichtet, dass die Bremskraft in Abhängigkeit von wenigstens einem die Bindevorrichtung betreffenden Parameter automatisch variiert wird. Normalerweise ist dies ein Parameter, der den aktuellen Betriebszustand der Bindevorrichtung beschreibt. Es kann sich hierbei allgemein um eine Position, eine Geschwindigkeit, eine Beschleunigung, eine Leistung oder eine andere Größe handeln. Die Bremskraft wird erfindungsgemäß also nicht konstant aufrechterhalten, sondern hängt von dem wenigstens einen Parameter ab. Wenn sich der Parameter ändert, erfolgt in Abhängigkeit hiervon automatisch eine Änderung der Bremskraft. Dabei kann es sein, dass in bestimmten Wertebereichen des Parameters keine Änderung der Bremskraft erfolgt. Es existiert aber zumindest ein Parameterbereich, in dem eine entsprechende Änderung resultiert. Die Stärke der notwendigen Bremskraft hängt in der Regel ausschließlich von Parametern ab, die die Bindevorrichtung selbst betreffen. Insofern sollte sich eine bedarfsgerechte Variation der Bremskraft an wenigstens einem derartigen Parameter orientieren. Es ist hierdurch möglich, die Bremskraft hinsichtlich ihres zeitlichen Einwirkens und/oder ihrer Stärke so zu steuern, dass ein unnötiges Bremsen oder ein unnötig starkes Bremsen vermieden werden. Somit ermöglicht die Erfindung einen sicheren Betrieb der Bindevorrichtung, wobei Verschleiß und Energiebedarf minimiert werden. Dennoch können unerwünschte Vorgänge wie bspw. ein Hinausbewegen über eine vorgesehene Totpunktlage effektiv vermieden werden. Auch kann die Nadelschwinge z.B. in ihrer unteren Totpunktlage gesichert werden, so dass sie zwischen zwei Bindezyklen zuverlässig in einer Position verbleibt. Andernfalls könnte sie sich z.B. unter dem Einfluss der Schwerkraft verstellen, wodurch z.B. ein Ankuppeln an den Antrieb beim nächsten Bindezyklus unmöglich werden könnte oder die Bindenadeln zwischen den Bindezyklen in den Presskanal hineinragen könnten.

Hinsichtlich der Erzeugung der Bremskraft bestehen im Rahmen der Erfindung keine Beschränkungen. Bspw. könnte diese durch einen elektrischen oder pneumatischen Aktor erzeugt werden. Auch wäre es denkbar, dass die Bremskraft durch ein Federelement erzeugt wird, wobei durch einen geeigneten Mechanismus die Vorspannung des Federelements in Abhängigkeit von dem wenigstens einen Parameter variiert wird. Eine bevorzugte Ausgestaltung sieht vor, dass die Bremsvorrichtung hydraulisch betätigbar ist. D.h. die Bremsvorrichtung weist wenigstens einen hydraulischen Aktor auf, mittels dessen die Bremskraft erzeugt wird. In einer Variante wäre bspw. auch denkbar, dass die Bremskraft durch ein Federelement erzeugt wird, wobei allerdings ein hydraulischer Aktor dem Federelement entgegenwirkt, um die Bremskraft zu reduzieren oder völlig deaktivieren zu können.

Eine bevorzugte Ausgestaltung sieht vor, dass die Bindevorrichtung derart eingerichtet ist, dass die Bremskraft in Abhängigkeit von einer Phase des Bindezyklus variiert wird. Die jeweilige Phase des Bindezyklus entspricht einerseits einem Zeitpunkt während des Bindezyklus sowie andererseits einer Position und einem Bewegungszustand der Nadelschwinge. Man kann auch von einer Bewegungsphase der Nadelschwinge innerhalb des Bindezyklus sprechen. Sofern, wie unten beschrieben, die Nadelschwinge an eine Steuerwelle gekoppelt ist, entspricht die Phase außerdem einem aktuellen Drehwinkel der Steuerwelle. In jedem Fall bedeutet die Variation in Abhängigkeit von der Phase des Bindezyklus, dass die Bremskraft im Verlauf des Bindezyklus variiert wird. Dementsprechend kann sie an die jeweiligen Erfordernisse angepasst werden, insbesondere daran, ob und wie stark die Nadelschwinge in einer bestimmten Bewegungsphase gebremst werden sollte.

In aller Regel ist die Bindevorrichtung dazu eingerichtet, wenigstens eine zeitlich begrenzte Bremsphase einzuleiten, die Bremskraft für die wenigstens eine Bremsphase zu erhöhen und nach der Bremsphase die Bremskraft zu reduzieren. Da die Bindevorrichtung beim normalen Betrieb nacheinander eine Mehrzahl von Bindezyklen durchläuft, zwischen welchen jeweils eine Ballenbildung erfolgt, ergeben sich eine Mehrzahl von Bremsphasen, nämlich wenigstens eine Bremsphase pro Bindezyklus. Insbesondere können eine Mehrzahl von Bremsphasen pro Bindezyklus vorgesehen sein. Im Vergleich zu der Phase vor der jeweiligen Bremsphase, die allgemein als Zwischenphase bezeichnet werden kann, wird die Bremskraft für die Bremsphasen erhöht. Dies schließt die Möglichkeit ein, dass die Bremskraft zuvor Null war. Während der Bremsphase wird die Bremskraft aufrechterhalten, muss allerdings nicht zwangsläufig konstant sein. In jedem Fall wird die Bremskraft nach der Bremsphase reduziert. Die schließt wiederum die Möglichkeit ein, dass die Bremskraft auf Null reduziert wird. Typischerweise wird die Bremskraft nach der Bremsphase auf den Wert reduziert, den sie vor der Bremsphase hatte, dies ist allerdings nicht zwangsläufig der Fall. Die jeweilige Bremsphase entspricht einem Zeitintervall. In aller Regel entspricht sie allerdings auch einem Positionsintervall der Nadelschwinge. D.h., die Bremsphase dauert an, solange die Position der Nadelschwinge in einem bestimmten Intervall oder Bereich liegt.

In den meisten Fällen ist das Ausüben einer Bremskraft nach der Bremsphase eher kontraproduktiv und führt lediglich zu einem unnötigen Verschleiß der Bremsvorrichtung. Daher ist die Bindevorrichtung bevorzugt dazu eingerichtet, die Bremskraft für wenigstens eine Bremsphase zu aktivieren und nach der Bremsphase die Bremskraft auf Null zu reduzieren. Somit wird die Bremsvorrichtung zwischen zwei Bremsphasen vollständig deaktiviert. Die entsprechende Zwischenphase kann hier auch als Freilaufphase bezeichnet werden. Erst für die nächste Bremsphase wird die Bremskraft wieder auf einen positiven Wert erhöht. Dabei ist es möglich, dass die Bremskraft nach der Bremsphase kontinuierlich, also nach und nach, reduziert wird. Alternativ ist es auch möglich, die Bremskraft diskontinuierlich auf Null zu reduzieren, so dass die Bremskraft stufenartig auf Null fällt.

Bevorzugt ist die Bindevorrichtung dazu eingerichtet, wenigstens eine Bremsphase vor Erreichen einer Totpunktlage der Nadelschwinge einzuleiten und spätestens nach Erreichen der Totpunktlage zu beenden. Die Totpunktlage bezeichnet dabei eine Position oder Lage, in welcher die Nadelschwinge bestimmungsgemäß stillsteht und eine Umkehr der Bewegungsrichtung erfährt. Man kann normalerweise eine obere Totpunktlage identifizieren, in welcher die Bindenadeln am weitesten in den Presskanal hineinragen und teilweise durch den Presskanal hindurchragen, sowie eine untere Totpunktlage, in der die Bindenadeln vollständig aus dem Presskanal zurückgezogen sind. Allerdings sind Bewegungsabläufe der Nadelschwinge denkbar, bei denen man mehr als die genannten zwei Totpunktlagen identifizieren kann. Z.B. könnte die Nadelschwinge aus der unteren Totpunktlage in die obere Totpunktlage, dann wieder in die untere Totpunktlage und von dort aus in eine mittlere Totpunktlage bewegt werden. Auch andere Bewegungsabläufe sind denkbar. Bei der hier beschriebenen Ausführungsform wird eine Bremsphase vor Erreichen einer Totpunktlage eingeleitet, d.h. die Bremskraft wird erhöht oder ggf. aktiviert, so dass die Nadelschwinge effektiv abgebremst wird. Hierdurch kann ein Überschwingen über die Totpunktlage hinaus verhindert werden. U.U. kann die Bremsphase bereits vor Erreichen der Totpunktlage beendet werden, z.B. in einem Zustand, in dem die Nadelschwinge so weit abgebremst ist, dass eine weitere Bremsung nicht notwendig ist. Spätestens nach Erreichen der Totpunktlage ist es sinnvoll, die Bremsphase zu beenden. Insbesondere sollte die Bremsphase beendet sein, wenn sich die Nadelschwinge wieder aus der Totpunktlage herausbewegt. Zu diesem Zeitpunkt wird die Nadelschwinge beschleunigt, was durch eine Reduzierung oder Deaktivierung der Bremskraft unterstützt werden sollte. Typischerweise kann insgesamt eine Bremsphase pro Totpunktlage während eines Bindezyklus vorgesehen sein.

Vorteilhaft kann die Bremsvorrichtung über einen Kopplungsmechanismus an eine relativ zum Rahmen drehbare Steuerwelle gekoppelt sein, über welche die Nadelschwinge wenigstens während eines Bindezyklus kraftübertragend an den Antrieb gekoppelt ist. Der Kopplungsmechanismus kann bspw. Elemente zur mechanischen Kraftübertragung aufweisen, Elemente zur aktorischen Krafterzeugung, Sensoren und/oder drahtlose oder drahtgebundene Signalübertragungsstrecken. In jedem Fall ist der Kopplungsmechanismus derart ausgebildet, dass die Bremskraft von einem Drehwinkel der Steuerwelle abhängt. Anders ausgedrückt, die Steuerwelle steuert über ihren Drehwinkel die Entwicklung der Bremskraft. Wenngleich auch andere Varianten denkbar sind, dreht die Steuerwelle normalerweise während eines Bindezyklus um 360°. Wenigstens während des Bindezyklus ist die Nadelschwinge über die Steuerwelle kraftübertragend an den motorischen Antrieb gekoppelt. Üblicherweise ist eine permanente mechanische Verbindung zwischen der Nadelschwinge und der Steuerwelle gegeben, bspw. über ein Gestänge, durch welches die rotatorische Bewegung der Steuerwelle in eine oszillierende Schwenkbewegung der Nadelschwinge übersetzt wird. Demgegenüber ist zwischen der Steuerwelle und dem motorischen Antrieb in der Regel eine Kupplung zwischengeordnet, so dass eine mechanische Verbindung während des Bindezyklus herstellbar und nach Abschluss des Bindezyklus lösbar ist. Bei dieser Ausführungsform sind also sowohl die Bremsvorrichtung als auch die Nadelschwinge während des Bindezyklus an die Steuerwelle gekoppelt und somit ist die Bremskraft automatisch mit den Bewegungen der Nadelschwinge synchronisiert. D.h., es erfolgt automatisch eine Variation der Bremskraft in Abhängigkeit von der Phase des Bindezyklus.

Gemäß einer Ausgestaltung weist der Kopplungsmechanismus eine drehfest mit der Steuerwelle verbundene Kurvenbahn auf sowie ein durch die Kurvenbahn gegenüber dem Rahmen auslenkbares Tastelement, durch dessen Auslenkung die Bremskraft variierbar ist. Die Kurvenbahn ist zumindest drehfest, normalerweise starr, mit der Steuerwelle verbunden. Prinzipiell wäre es auch denkbar, die Kurvenbahn über zwischengeordnete Getriebekomponenten an die Steuerwelle zu koppeln, was allerdings im Allgemeinen einen erhöhten Aufwand ohne nennenswerte Vorteile bedeuten würde. Durch die Kopplung an die Steuerwelle ist zum einen eine exakte Synchronisation zwischen der Veränderung der Bremskraft und dem Bindezyklus der Nadelschwinge garantiert. Zum anderen kann die Kurvenbahn den gesamten Verlauf der Bremskraft während des Bindezyklus abbilden, ohne dass sich Bereiche unnötig wiederholen. Die Kurvenbahn kann die Außenkontur einer Scheibe bilden, die mit der Steuerwelle verbunden ist. In diesem Fall kann das Tastelement von außen an der Kurvenbahn anliegen, wobei es durch ein Federelement in Richtung auf die Kurvenbahn vorgespannt sein kann. Die Kurvenbahn könnte aber z.B. auch durch eine Nut gebildet sein, in welche das Tastelement eingreift, oder durch einen Steg, an welchem das Tastelement angreift. In jedem Fall weist die Kurvenbahn radial vorspringenden Bereiche sowie radial zurückreichende Bereiche auf, wodurch das Tastelement unterschiedlich ausgelenkt wird. Das Tastelement kann verschiebbar und/oder schwenkbar mit dem Rahmen verbunden sein. Durch die Auslenkung des Tastelements ist die Bremskraft variierbarer. Normalerweise entspricht dabei eine bestimmte Auslenkung des Tastelement einer bestimmten Bremskraft. Es wäre allerdings auch denkbar, dass die Bremskraft nur in einem bestimmten Bereich von der Auslenkung abhängt und bei Überschreitung dieses Bereiches keine weitere Veränderung der Bremskraft erfolgt. Allgemein ist das Tastelement an die Bremsvorrichtung gekoppelt, wobei die Kopplung im allgemeinen Fall nicht notwendigerweise kraftübertragend sein muss. Es wäre z.B. auch denkbar, die Auslenkung des Tastelement durch einen Sensor zu erfassen, durch dessen Signal wiederum ein Aktor der Bremsvorrichtung gesteuert wird.

Eine bevorzugte Ausgestaltung sieht vor, dass das Tastelement mit einem Hydraulikventil zusammenwirkt, durch welches die Bremsvorrichtung betätigbar ist. Somit bewirkt eine Auslenkung des Tastelement eine Veränderung des Zustands des Hydraulikventils. Das Hydraulikventil kann als Wegeventil ausgebildet sein, wobei bestimmte Verbindungen durch die Einwirkung des Tastelements geöffnet oder geschlossen werden. Es ist aber auch denkbar, dass das Hydraulikventil in Abhängigkeit von der Auslenkung des Tastelements unterschiedlich weit geöffnet wird. Die Bremsvorrichtung ist durch das Hydraulikventil betätigbar, d.h. die Bremskraft hängt vom Zustand des Hydraulikventils ab. Bspw. könnte ein hydraulischer Aktor, welcher Teil der Bremsvorrichtung ist, mit Druck beaufschlagt werden, wenn das Hydraulikventil geöffnet wird. Statt einem Tastelement und einer Kurvenbahn könnte der Drehwinkel der Steuerwelle auch über einen Sensor erfasst werden und in Abhängigkeit vom erfassten Drehwinkel könnte ein Hydraulikventil elektronisch gesteuert werden. In einer weiteren Abwandlung könnte das Tastelement an einen Kolben eines Geberzylinders eines Hydrauliksystems gekoppelt sein, so dass durch Auslenkung des Tastelements unmittelbar eine Veränderung des Hydraulikdrucks hervorgerufen wird. Diese bewirkt wiederum eine Änderung der Bremskraft an einer hydraulisch betätigbaren Bremsvorrichtung.

Wenn statt einer hydraulischen Krafterzeugung eine Krafterzeugung mittels eines Federelements gewählt wird, könnte ein Mechanismus, welcher dem Federelement entgegenwirkt oder dessen Vorspannung reduziert, an die Kurvenbahn gekoppelt sein. Insbesondere könnte eine mechanische Kopplung gegeben sein. Ein solcher Mechanismus könnte allerdings auch einen hydraulischen Aktor aufweisen, der in der oben beschriebenen Art an das Tastelement und die Kurvenbahn gekoppelt ist.

Erfindungsgemäß ist die Bindevorrichtung derart eingerichtet, dass die Bremskraft in Abhängigkeit von einer Antriebsgeschwindigkeit des Antriebs variiert wird. Dies kann bevorzugt zusätzlich zu einer Variation der Bremskraft in Abhängigkeit von der Phase des Bindezyklus erfolgen. Normalerweise ist bei dieser Ausgestaltung einer bestimmten Antriebsgeschwindigkeit eine bestimmte Bremskraft eindeutig zugeordnet, unter der Voraussetzung das andere eventuell relevante Parameter, wie die Position der Nadelschwinge, vorgegeben sind. Insbesondere kann eine maximal mögliche Bremskraft eindeutig von der Antriebsgeschwindigkeit abhängen. Der Begriff "Antriebsgeschwindigkeit" bezeichnet allgemein eine Größe, die charakterisiert, wie schnell der motorische Antrieb betrieben wird. Insbesondere kann dies auch eine Drehzahl des Antriebs sein, oder ggf. eine Winkelgeschwindigkeit.

Erfindungsgemäß steigt die Bremskraft mit steigender Antriebsgeschwindigkeit an.

Eine höhere Antriebsgeschwindigkeit bedeutet, dass der Bindezyklus in kürzerer Zeit erfolgt. Dementsprechend muss sich die Nadelschwinge schneller bewegen, was wiederum höhere Beschleunigungs- und Verzögerungskräfte erfordert Insbesondere kann vorgesehen sein, dass die Bremskraft proportional zum Quadrat der Antriebsgeschwindigkeit ansteigt.

Insbesondere kann vorgesehen sein, dass ein Hydraulikdruck zur Betätigung der Bremsvorrichtung mit steigender Antriebsgeschwindigkeit ansteigt. Ein entsprechender Zusammenhang ist bei Hydrauliksystemen oftmals gegeben. Insbesondere kann der Hydraulikdruck quadratisch von der Drehzahl des Antriebs abhängen, d.h. er ist in diesem Fall proportional zum Quadrat der Drehzahl. Bei einer hydraulisch wirkenden Bremsvorrichtung ist wiederum die Bremskraft normalerweise proportional zum Hydraulikdruck. D.h., es wird eine Bremskraft erzeugt, die proportional zum Quadrat der Drehzahl ist. Dies bedeutet eine optimale Anpassung an die mit steigender Antriebsgeschwindigkeit ansteigenden Beschleunigungs- bzw. Verzögerungskräfte, die auf die Nadelschwinge wirken müssen. Diese sind nämlich auch proportional zum Quadrat der Antriebsgeschwindigkeit, d.h. normalerweise zum Quadrat der Drehzahl.

Bevorzugt weist die Bremsvorrichtung eine Scheibenbremse auf, mit einem am Rahmen aufgehängten Bremssattel sowie mit einer Bremsscheibe, die wenigstens kraftübertragend an die Nadelschwinge koppelbar ist. Insbesondere kann die Bremsscheibe kraftübertragend an die Nadelschwinge gekoppelt sein. D.h. es kann eine permanente Kopplung bestehen. Die Bremsscheibe kann starr mit der Nadelschwinge verbunden sein oder sogar einstückig mit dieser ausgebildet sein. Es wäre allerdings auch eine bewegliche Verbindung denkbar. Die kraftübertragende Kopplung bedeutet in jedem Fall, dass die Bewegung der Bremsscheibe an die Bewegung der Nadelschwinge gekoppelt ist. Dies bedeutet normalerweise, dass die Nadelschwinge angehalten wird, wenn die Bremsscheibe angehalten wird. Am Bremssattel sind wiederum die Bremsbeläge angeordnet, die mit der Bremsscheibe zusammenwirken, um die Bremskraft zu erzeugen. Diese können insbesondere durch einen oder mehrere Bremskolben betätigt werden. Der jeweilige Bremskolben kann bevorzugt hydraulisch bewegt werden. Es ist ausdrücklich auch möglich, dass mehrere Bremssättel einer Bremsscheibe zugeordnet sind und/oder dass die Bremsvorrichtung eine Mehrzahl von Scheibenbremsen aufweist.

Bevorzugt ist ein am Bremssattel angeordneter Bremsbelag gegenüber dem Rahmen mit wenigstens einem Freiheitsgrad beweglich ist. Entweder ist der Bremssattel nicht starr mit dem Rahmen verbunden, sondern ist mit diesem beweglich verbunden, womit auch der Bremsbelag beweglich ist. Alternativ kann auch der Bremsbelag beweglich am Bremssattel angeordnet sein. Dabei ist die Beweglichkeit in der Regel auf einen gewissen Bewegungsspielraum begrenzt. Die Beweglichkeit beinhaltet wenigstens einen Freiheitsgrad. Dabei kann es sich um wenigstens einen translatorischen Freiheitsgrad und/oder wenigstens einen rotatorischen Freiheitsgrad handeln. Insbesondere kann sowohl wenigstens ein translatorischer als auch wenigstens ein rotatorischer Freiheitsgrad gegeben sein. Der Bremsbelag (oder der gesamte Bremssattel) kann - innerhalb des o.g. Bewegungsspielraums - entweder frei beweglich sein, oder er kann durch ein elastisches Rückstellelement in eine Ruhelage rückstellbar sein. In jedem Fall ermöglicht die bewegliche Verbindung eine Anpassung an Lageveränderungen zwischen der Bremsscheibe und dem Rahmen. Diese können ihre Gründe z.B. in Verformungen verschiedener Bauteile haben, die z.B. durch thermische Ausdehnung bedingt sind. Wenn sich der Bremsbelag nicht an die Lageveränderungen anpassen könnte, so könnte dies zu einer unplanmäßigen Erhöhung oder Verringerung der Bremskraft führen, zu einem ungewollten Schleifen von Bremsbelägen an der Bremsscheibe etc.

Die Aufgabe wird zudem mit einer Ballenpresse nach Anspruch 13 gelöst, die eine Bindevorrichtung nach einem der vorherigen Ansprüche aufweist.

Die genannten Begriffe wurden bereits oben mit Bezug auf die erfindungsgemäße Bindevorrichtung erläutert und werden daher nicht nochmals erklärt. Vorteilhafte Ausgestaltungen der erfindungsgemäßen Ballenpresse entsprechen denen der erfindungsgemäßen Bindevorrichtung.

Im Folgenden wird die Erfindung anhand von Figuren beschrieben. Die Figuren sind lediglich beispielhaft und schränken den allgemeinen Erfindungsgedanken nicht ein.

Es zeigen
- Fig. 1: eine perspektivische Darstellung eines Teils einer erfindungsgemäßen Ballenpresse;
- Fig. 2: eine Seitenansicht einer Bindevorrichtung der Ballenpresse aus Fig.1 in einem ersten Zustand;
- Fig. 3: eine Seitenansicht der Bindevorrichtung in einem zweiten Zustand;
- Fig. 4: eine diagrammatische Darstellung von Teilen der Bindevorrichtung; sowie
- Fig. 5: ein Diagramm, welches den Zusammenhang zwischen einem Drehwinkel einer Steuerwelle und einem Schwenkwinkel einer Nadelschwinge sowie einer Bremskraft darstellt.

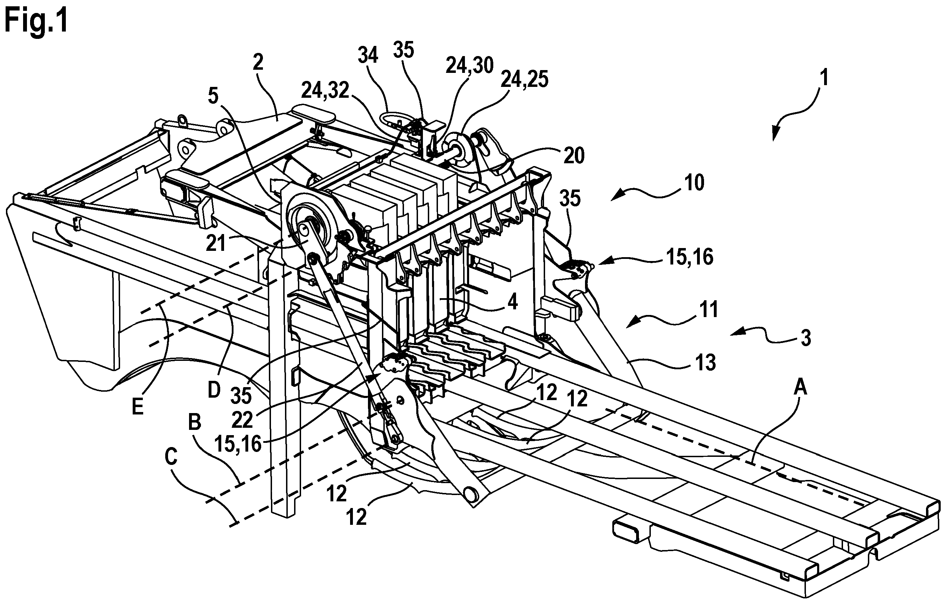

Fig. 1 zeigt eine perspektivische Darstellung von Teilen einer erfindungsgemäßen Ballenpresse 1, genauer gesagt eine Quaderballenpresse. Verschiedene Komponenten, die zum Verständnis der Erfindung nicht relevant sind, wurden weggelassen, z.B. ein Fahrwerk sowie eine Deichsel, mittels welcher die Ballenpresse 1 an ein Zugfahrzeug koppelbar ist. Die Erfindung ist ausdrücklich nicht auf gezogene oder getragene Ballenpressen beschränkt, sondern bezieht sich auch auf selbstfahrende Ballenpressen. Die Ballenpresse 1 weist einen Rahmen 2 auf. Innerhalb des Rahmens 2 ist ein Presskanal 3 definiert, der sich entlang einer Kanallängsachse A erstreckt. Die seitliche sowie obere Verkleidung des Presskanals 3 ist in der Figur teilweise weggelassen. Innerhalb des Presskanals 3 wird ein nicht dargestellter Quaderballen sukzessive aus Portionen von Erntegut aufgebaut, welche in einer hier nicht sichtbaren Sammelkammer vorverdichtet wurden. Dabei wird das Erntegut im Presskanal 3 durch einen oszillierenden Presskolben 4 verdichtet. Wenn der Quaderballen seine vorbestimmte Größe erreicht hat, wird er mittels eines Bindemittels, bspw. eines Garns oder eines thermoplastischen Bandes, zusammengebunden. Dabei werden insgesamt sechs Schleifen aus Bindemittel, die quer zur Kanallängsachse A voneinander beabstandet sind, um den Quaderballen gelegt. Zur Bildung der jeweiligen Schleife wird ein Endbereich des Bindemittels, welcher an einem Ende des Ballens an dessen Oberseite festgehalten wird, mit einem Abschnitt verbunden, zu diesem Zweck von unten in den Presskanal 3 geführt wird.

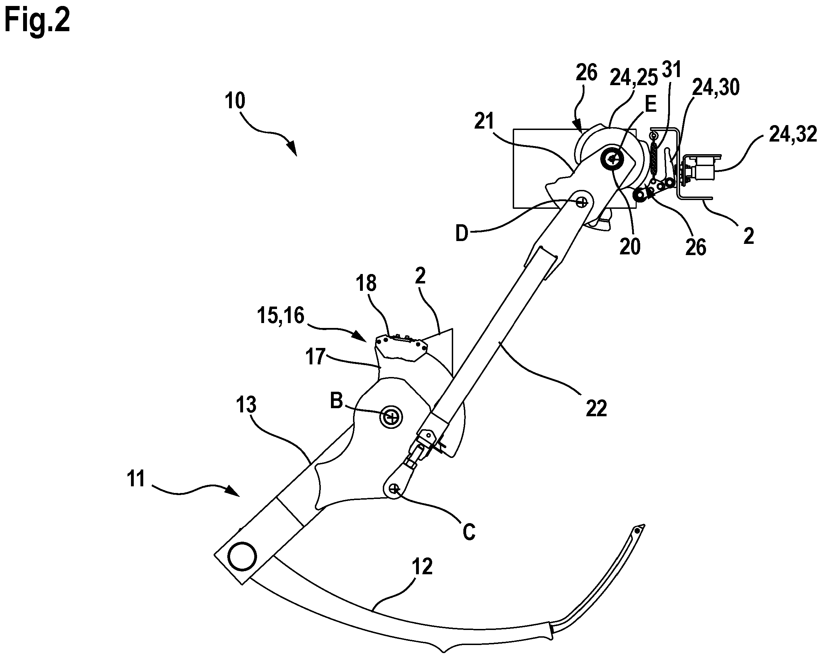

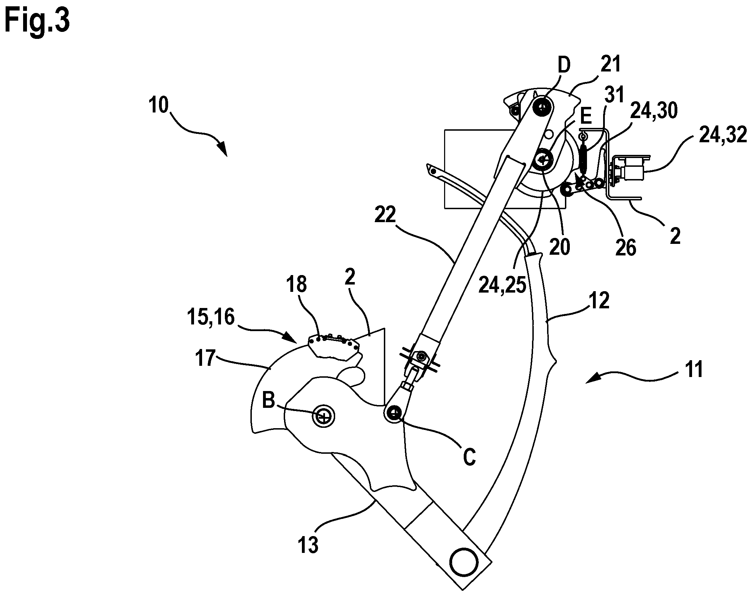

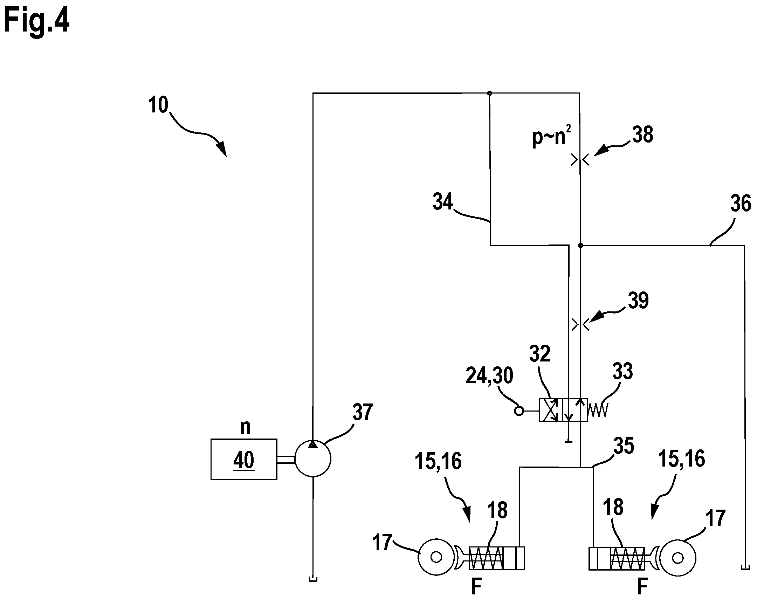

Dies geschieht mittels sechs Bindenadeln 12, die Teil einer Nadelschwinge 11 sind. Die Nadelschwinge 11 wiederum ist Teil einer erfindungsgemäßen Bindevorrichtung 10. Die Nadelschwinge 11 weist einen Schwingenträger 13 auf, an dem die Bindenadeln 12 befestigt sind, und der um eine Schwingenschwenkachse B schwenkbar mit dem Rahmen 2 der Ballenpresse 1 verbunden ist. Exzentrisch zur Schwingenschwenkachse B setzt über eine erste Koppelschwenkachse C jeweils eine Koppelstange 22 am Schwingenträger 13 an. Diese Koppelstange 22 ist an ihrem gegenüberliegenden Ende über eine zweite Koppelschwenkachse D schwenkbar mit einem Antriebselement 21 verbunden, das seinerseits drehfest mit einer Steuerwelle 20 verbunden ist. Die Steuerwelle 20 kann über ein Kupplungsgetriebe 5 mit einem (in Fig. 4 schematisch dargestellten) motorischen Antrieb 40 verbunden werden, so dass sie sich um eine Wellendrehachse E dreht und die Nadelschwinge 11 für einen Bindezyklus angetrieben wird. Dabei befindet sich die Nadelschwinge 11 zunächst in einer unteren Totpunktlage, in welcher die Koppelschwenkachsen C, D und die Wellendrehachse E entsprechend Fig. 1 und 2 in einer Ebene liegen und die Bindenadeln 12 vollständig außerhalb des Presskanals 2 angeordnet sind. Aus dieser unteren Totpunktlage wird die Nadelschwinge 11 in eine obere Totpunktlage bewegt, in welcher wiederum die Koppelschwenkachsen C, D und die Wellendrehachse E in einer Ebene liegen, wobei allerdings die Wellendrehachse E zwischen den Koppelschwenkachsen C, D angeordnet ist. Fig. 3 stellt einen Zustand kurz vor Erreichen der oberen Totpunktlage dar. In der oberen Totpunktlage ragen die Bindenadeln 12 in den Presskanal 3 hinein und teilweise nach oben über diesen hinaus, wobei sie den o.g. Abschnitt des Bindemittels mitführen. Es erfolgt ein Verbinden dieses Abschnitts mit dem Endbereich des Bindemittels zur Bildung der Schleifen sowie ein Abtrennen des Bindematerials. Diese Vorgänge werden hier nicht im Detail diskutiert.

Aufgrund der Masse bzw. des Trägheitsmoments der Nadelschwinge 11 und der teilweise kurzen Taktzeiten und damit verbundenen hohen Geschwindigkeiten der Nadelschwinge 11 sind erhebliche Kräfte notwendig, um diese in der jeweiligen Totpunktlage wie vorgesehen zum Stillstand zu bringen. Zu diesem Zweck weist die Bindevorrichtung 10 eine Bremsvorrichtung 15 auf, die vorliegend zwei Scheibenbremsen 16 aufweist, welche auf gegenüberliegenden Seiten des Presskanals 3 angeordnet sind. Jede der Scheibenbremsen 16 weist eine Bremsscheibe 17 auf, die starr mit dem Schwingenträger 13 verbunden ist, sowie einen Bremssattel 18, der mit dem Rahmen 2 verbunden ist. Ein in den Figuren nicht sichtbarer Bremsbelag ist derart mit dem Bremssattel 18 verbunden, dass er innerhalb gewisser Grenzen sowohl eine Translation als auch eine Rotation relativ zum Rahmen 2 ausführen kann. Somit kann verhindert werden, dass Verformungen, die bei der Herstellung der Ballenpresse oder bei deren Betrieb auftreten können, die Wirkung der jeweiligen Scheibenbremse 16 in unvorhersehbarer Weise beeinflussen.

Die Scheibenbremsen 16 sind über eine sich aufteilende Bremsleitung 35 mit einem Wegeventil 32 verbunden. Wie insbesondere in Fig. 2 und 3 erkennbar ist, ist dem Wegeventil 32 ein Tastelement 30 zugeordnet, das schwenkbar am Rahmen 2 angeordnet ist. Das Tastelement 30 ist durch ein erstes Federelement 31 in Richtung auf eine Ruhelage vorgespannt, in welcher es das Wegeventil 32 beaufschlagt, so dass es die Bremsleitung 35 mit einer Hauptleitung 34 verbindet. Wie aus der schematischen Darstellung in Fig.4 ersichtlich ist, wird das Wegeventil 32 durch ein zweites Federelement 33 in eine Stellung vorgespannt, in welcher es die Bremsleitung 35 von der Hauptleitung 34 isoliert und mit einer Rücklaufleitung 36 verbindet. Die Hauptleitung 34 ist mit einer Pumpe 37 verbunden, die an den Antrieb 40 gekoppelt ist, der während des Bindezyklus die Nadelschwinge 11 antreibt. Durch eine Primärdrossel 38 wird in der Hauptleitung 34 ein Druck p erzeugt, der proportional zum Quadrat einer Drehzahl n des Antriebs 40 ist. Ist die Bremsleitung 35 von der Hauptleitung 34 getrennt, bleiben die Scheibenbremsen 16 gelöst. Ein solcher Zustand ist in Fig. 2 und 4 gezeigt.

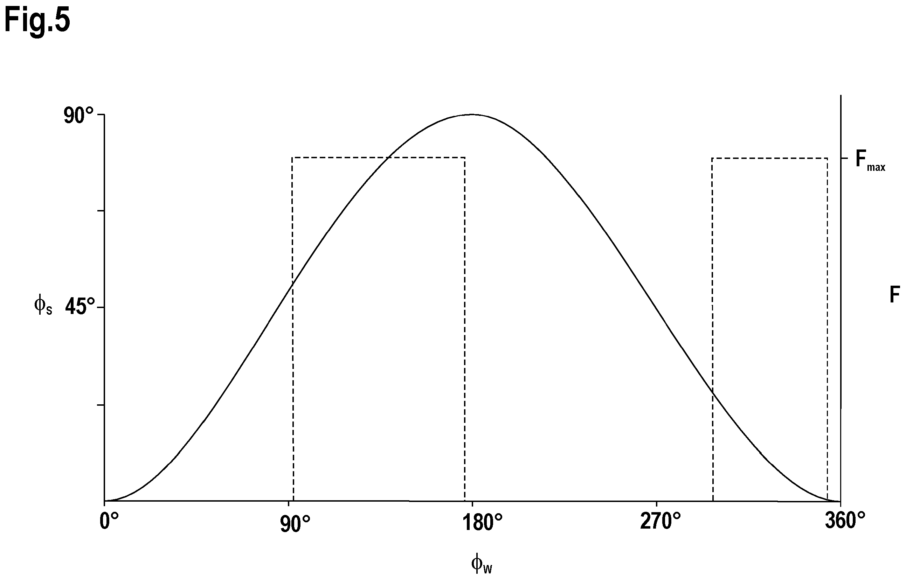

Das Tastelement 30 wirkt mit einer Kurvenbahn 25 zusammen, die drehfest mit der Steuerwelle 20 verbunden ist. Das Tastelement 30, die Kurvenbahn 25 und das Wegeventil 32 gehören zu einem Kopplungsmechanismus 24, durch den die Bremsvorrichtung 15 an die Steuerwelle 20 gekoppelt ist. Die Kurvenbahn 25 weist zwei vorspringende Bereiche 26 auf. Wenn einer der vorspringenden Bereiche 26 bei der Rotation der Steuerwelle 20 das Tastelement 30 erreicht, wird dieses aus seiner Ruhelage ausgelenkt und entlastet das Wegeventil 32, so dass dieses die Bremsleitung 35 von der Hauptleitung 34 isoliert und die Scheibenbremsen 16 deaktiviert. Ein solcher Zustand ist in Fig. 2 gezeigt. Somit ist die Aktivierung der Scheibenbremsen 16 über die Steuerwelle 20 an die Bewegungen der Nadelschwinge 11 gekoppelt. D.h. die Bremskraft F wird in Abhängigkeit von einer jeweiligen Phase des Bindezyklus aktiviert oder deaktiviert. Dies ist in Fig. 5 erkennbar, die zum einen den Verlauf eines Schwenkwinkels ϕs (durchgezogene Linie) der Nadelschwinge 11 sowie zum anderen einen Verlauf der Bremskraft F (gestrichelte Linie) in Abhängigkeit von einem Drehwinkel ϕw der Steuerwelle zeigt. Die Totpunktlagen entsprechen einem Schwenkwinkel ϕs von 0° sowie von 90° und werden in diesem Beispiel bei Drehwinkeln ϕw von 0° und 180° erreicht. Die Lage der vorspringenden Bereiche 26 der Kurvenbahn 25 ist so gewählt, dass die Bremskraft F jeweils vor Erreichen einer Totpunktlage aktiviert wird und bei oder kurz vor Erreichen der Totpunktlage wieder deaktiviert wird. So bleibt die Bremskraft F zunächst von einem Drehwinkel ϕw von 0° bis ungefähr 95°, entsprechend einem Schwenkwinkel ϕs zwischen 0° und ungefähr 50°, deaktiviert. Fig. 2 entspricht dabei einem Schwenkwinkel ϕs von ungefähr 5°, also kurz nach Verlassen der unteren Totpunktlage. Dann wird eine erste Bremsphase bei einem Drehwinkel ϕw von 95° bis ungefähr 175° durchlaufen, entsprechend einem Schwenkwinkel ϕs ungefähr 50° bis ungefähr 87°, also kurz vor der oberen Totpunktlage. Während dieser ersten Bremsphase wird mit einer maximalen Bremskraft Fₘₐₓ gebremst. Fig. 3 entspricht dabei einem Schwenkwinkel ϕs von ungefähr 80°, also kurz vor Erreichen der oberen Totpunktlage. Im Weiteren wird die Bremskraft F bei einem Drehwinkel ϕw von ungefähr 175° bis ungefähr 300° wieder deaktiviert. In dieser Zeit steigt der Schwenkwinkel ϕs von ungefähr 87° auf 90° und sinkt wieder, auf ungefähr 27°. Dann wird eine zweite Bremsphase bei einem Drehwinkel ϕw von 300° bis ungefähr 355° durchlaufen, entsprechend einem Schwenkwinkel ϕs ungefähr 27° und ungefähr 2°, also kurz vor der unteren Totpunktlage. Während dieser zweiten Bremsphase wird wiederum mit einer maximalen Bremskraft Fₘₐₓ gebremst. Auf diese Weise unterstützt die Bremskraft F das kontrollierte Erreichen der Totpunktlage, behindert allerdings nicht die Beschleunigung der Nadelschwinge 11 bei der Bewegung aus der Totpunktlage heraus. Optional kann zwischen dem Wegeventil 32 und der Rücklaufleitung 36 eine Sekundärdrossel vorgesehen sein, wodurch der Druckabfall in der Bremsleitung 35 verlangsamt wird, wenn die Verbindung zur Hauptleitung 24 unterbrochen wird.

Da der erzeugte Druck p in der Hauptleitung 34 und, bei entsprechender Verbindung, in der Bremsleitung 35 proportional zum Quadrat der Drehzahl n des Antriebs 40 ist, gilt dies auch für die Bremskraft F, wenn die Scheibenbremsen 16 aktiviert werden, genauer gesagt, für die maximale Bremskraft Fₘₐₓ. Da andererseits die Nadelschwinge 11 während des Bindezyklus über die Steuerwelle 20 an den Antrieb 20 gekoppelt ist, ist ihre Geschwindigkeit proportional zur Drehzahl n und die notwendigen Beschleunigungs- und Verzögerungskräfte wachsen mit dem Quadrat der Drehzahl n an. Somit sorgt die Erhöhung des Drucks p mit steigender Drehzahl n für eine geeignete Erhöhung der Bremskräfte F.

Da bei der erfindungsgemäßen Bindevorrichtung 10 die Bremskraft F hinsichtlich ihres Einwirkens an die jeweilige Phase des Bindezyklus angepasst ist und hinsichtlich ihrer Stärke an die Drehzahl n des Antriebs oder die Taktzeit des Bindezyklus angepasst ist, wird einerseits eine sichere Führung der Nadelschwinge 11 sichergestellt, während andererseits unnötiger Energieverbrauch und Verschleiß seitens der Bremsvorrichtung 15 verhindert werden. Da die Bremskraft nur zeitweise und gezielt einwirkt, kann die Nadelschwinge 11 effektiver beschleunigt werden. Dies bedeutet z.B., dass die oberer Totpunktlage präzise erreicht werden kann, wenn der Erntegutballen durch den Presskolben 4 maximal komprimiert ist. Somit kann der Erntegutballen beim Abbinden eine optimale Dichte aufweisen.

## Patentansprüche

1. Bindevorrichtung (10) für eine Ballenpresse (1), aufweisend eine Nadelschwinge (11) mit einer Mehrzahl von Bindenadeln (12) zum Zuführen eines Bindemittels in einen Presskanal (3), wobei die Nadelschwinge (11) durch einen motorischen Antrieb (40) derart antreibbar ist, dass sie sich entsprechend einem Bindezyklus relativ zu einem Rahmen (2) der Ballenpresse (1) bewegt, sowie aufweisend eine Bremsvorrichtung (15), die dazu eingerichtet ist, eine wenigstens indirekt auf die Nadelschwinge (11) wirkende Bremskraft (F) auszuüben, wobei die Bindevorrichtung (10) derart eingerichtet ist, dass die Bremskraft (F) in Abhängigkeit von wenigstens einem die Bindevorrichtung (10) betreffenden Parameter automatisch variiert wird,
**dadurch gekennzeichnet, dass**
die Bindevorrichtung (10) derart eingerichtet ist, dass die Bremskraft (F) in Abhängigkeit von einer Antriebsgeschwindigkeit (n) des Antriebs (40) variiert wird, wobei die Bremskraft (F) mit steigender Antriebsgeschwindigkeit (n) ansteigt.

2. Bindevorrichtung nach Anspruch 1, **dadurch gekennzeichnet, dass** die Bremsvorrichtung (15) hydraulisch betätigbar ist.

3. Bindevorrichtung nach einem der vorherigen Ansprüche, **dadurch gekennzeichnet, dass** diese derart eingerichtet ist, dass die Bremskraft (F) in Abhängigkeit von einer Phase des Bindezyklus variiert wird.

4. Bindevorrichtung nach einem der vorherigen Ansprüche, **dadurch gekennzeichnet, dass** diese dazu eingerichtet ist, wenigstens eine zeitlich begrenzte Bremsphase einzuleiten, die Bremskraft (F) für die wenigstens eine Bremsphase zu erhöhen und nach der Bremsphase die Bremskraft (F) zu reduzieren.

5. Bindevorrichtung nach Anspruch 4, **dadurch gekennzeichnet, dass** diese dazu eingerichtet ist, die Bremskraft (F) für wenigstens eine Bremsphase zu aktivieren und nach der Bremsphase die Bremskraft (F) auf Null zu reduzieren.

6. Bindevorrichtung nach einem der Ansprüche 3 bis 5, **dadurch gekennzeichnet, dass** diese dazu eingerichtet ist, wenigstens eine Bremsphase vor Erreichen einer Totpunktlage der Nadelschwinge (11) einzuleiten und spätestens nach Erreichen der Totpunktlage zu beenden.

7. Bindevorrichtung nach einem der vorherigen Ansprüche, **dadurch gekennzeichnet, dass** die Bremsvorrichtung (15) über einen Kopplungsmechanismus (24) an eine relativ zum Rahmen (2) drehbare Steuerwelle (20) gekoppelt ist, über welche die Nadelschwinge (11) wenigstens während eines Bindezyklus kraftübertragend an den Antrieb (40) gekoppelt ist.

8. Bindevorrichtung nach Anspruch 7, **dadurch gekennzeichnet, dass** der Kopplungsmechanismus (24) eine drehfest mit der Steuerwelle (20) verbundene Kurvenbahn (25) aufweist sowie ein durch die Kurvenbahn (25) gegenüber dem Rahmen (2) auslenkbares Tastelement (30), durch dessen Auslenkung die Bremskraft (F) variierbar ist.

9. Bindevorrichtung nach Anspruch 8, **dadurch gekennzeichnet, dass** das Tastelement (30) an ein Hydraulikventil (32) gekoppelt ist, durch welches die Bremsvorrichtung (15) betätigbar ist.

10. Bindevorrichtung nach einem der Ansprüche 2 bis 9, **dadurch gekennzeichnet, dass** ein Hydraulikdruck zur Betätigung der Bremsvorrichtung (15) mit steigender Antriebsgeschwindigkeit (n) ansteigt.

11. Bindevorrichtung nach einem der vorherigen Ansprüche, **dadurch gekennzeichnet, dass** die Bremsvorrichtung (15) eine Scheibenbremse (16) aufweist, mit einem am Rahmen (2) aufgehängten Bremssattel (18) sowie mit einer Bremsscheibe (17), die kraftübertragend an die Nadelschwinge (11) gekoppelt ist.

12. Bindevorrichtung nach Anspruch 11, **dadurch gekennzeichnet, dass** ein am Bremssattel (18) angeordneter Bremsbelag gegenüber dem Rahmen (2) mit wenigstens einem Freiheitsgrad beweglich ist.

13. Ballenpresse (1), mit einer Bindevorrichtung (10) nach einem der vorherigen Ansprüche.

## Claims

1. Binding device (10) for a baler (1), comprising a needle yoke (11) having a plurality of binding needles (12) for feeding a binding means into a baling channel (3), wherein the needle yoke (11) can be driven by a motor drive (40) such that it moves relative to a frame (2) of the baler (1) according to a binding cycle, and comprising a braking device (15) which is designed to exert a braking force (F) acting at least indirectly on the needle yoke (11), wherein the binding device (10) is designed such that the braking force (F) is automatically varied depending on at least one parameter relating to the binding device (10),
**characterized in that**
the binding device (10) is designed such that the braking force (F) is varied depending on a drive speed (n) of the drive (40), wherein the braking force (F) increases as the drive speed (n) increases.

2. Binding device according to claim 1, **characterized in that** the braking device (15) can be hydraulically actuated.

3. Binding device according to either of the preceding claims,
**characterized in that** said binding device is designed such that the braking force (F) is varied depending on a phase of the binding cycle.

4. Binding device according to any of the preceding claims,
**characterized in that** said binding device is designed to initiate at least one time-limited braking phase, to increase the braking force (F) for the at least one braking phase, and to reduce the braking force (F) after the braking phase.

5. Binding device according to claim 4, **characterized in that** said binding device is designed to activate the braking force (F) for at least one braking phase and to reduce the braking force (F) to zero after the braking phase.

6. Binding device according to any of claims 3 to 5, **characterized in that** said binding device is designed to initiate at least one braking phase before a dead center position of the needle yoke (11) is reached, and to end the braking phase at the latest after the dead center position has been reached.

7. Binding device according to any of the preceding claims,
**characterized in that** the braking device (15) is coupled by means of a coupling mechanism (24) to a camshaft (20) which is rotatable relative to the frame (2) and by means of which the needle yoke (11) is force-transmittingly coupled to the drive (40) at least during a binding cycle.

8. Binding device according to claim 7, **characterized in that** the coupling mechanism (24) has a cam track (25) which is connected to the camshaft (20) for conjoint rotation and a contact element (30) which can be displaced relative to the frame (2) by means of the cam track (25), and by means of the displacement of which contact element the braking force (F) can be varied.

9. Binding device according to claim 8, **characterized in that** the contact element (30) is coupled to a hydraulic valve (32) by means of which the braking device (15) can be actuated.

10. Binding device according to any of claims 2 to 9, **characterized in that** a hydraulic pressure for actuating the braking device (15) increases as the drive speed (n) increases.

11. Binding device according to any of the preceding claims,
**characterized in that** the braking device (15) comprises a disk brake (16) having a brake caliper (18) suspended on the frame (2) and having a brake disc (17) which is force-transmittingly coupled to the needle yoke (11).

12. Binding device according to claim 11, **characterized in that** a brake pad arranged on the brake caliper (18) is movable relative to the frame (2) with at least one degree of freedom.

13. Baler (1) having a binding device (10) according to any of the preceding claims.

## Revendications

1. Dispositif de liage (10) pour une presse à balles (1), présentant un bras oscillant à aiguilles (11) comportant une pluralité d'aiguilles de liage (12) pour l'amenée d'un moyen de liage dans un conduit presseur (3), dans lequel le bras oscillant à aiguilles (11) peut être entraîné par un entraînement (40) motorisé de telle sorte qu'il se déplace d'une manière correspondant à un cycle de liage par rapport à un cadre (2) de la presse à balles (1), ainsi que présentant un dispositif de freinage (15) qui est conçu pour exercer une force de freinage (F) agissant au moins indirectement sur le bras oscillant à aiguilles (11), dans lequel le dispositif de liage (10) est configuré de telle sorte que la force de freinage (F) varie automatiquement en fonction d'au moins un paramètre concernant le dispositif de liage (10),
**caractérisé en ce que**
le dispositif de liage (10) est configuré de telle sorte que la force de freinage (F) varie en fonction d'une vitesse d'entraînement (n) de l'entraînement (40), dans lequel la force de freinage (F) augmente lorsque la vitesse d'entraînement (n) augmente.

2. Dispositif de liage selon la revendication 1, **caractérisé en ce que** le dispositif de freinage (15) peut être actionné hydrauliquement.

3. Dispositif de liage selon l'une des revendications précédentes,
**caractérisé en ce que** celui-ci est configuré de telle sorte que la force de freinage (F) varie en fonction d'une phase du cycle de liage.

4. Dispositif de liage selon l'une des revendications précédentes,
**caractérisé en ce que** celui-ci est configuré pour initier au moins une phase de freinage limitée dans le temps, pour augmenter la force de freinage (F) pendant l'au moins une phase de freinage et pour réduire la force de freinage (F) après la phase de freinage.

5. Dispositif de liage selon la revendication 4, **caractérisé en ce que** celui-ci est configuré pour activer la force de freinage (F) pendant au moins une phase de freinage et pour réduire la force de freinage (F) à zéro après la phase de freinage.

6. Dispositif de liage selon l'une des revendications 3 à 5,
**caractérisé en ce que** celui-ci est configuré pour initier au moins une phase de freinage avant d'atteindre une position de point mort du bras oscillant à aiguilles (11) et pour y mettre fin au plus tard après avoir atteint la position de point mort.

7. Dispositif de liage selon l'une des revendications précédentes,
**caractérisé en ce que** le dispositif de freinage (15) est accouplé, par l'intermédiaire d'un mécanisme d'accouplement (24), à un arbre de commande (20) pouvant tourner par rapport au cadre (2), par l'intermédiaire duquel le bras oscillant à aiguilles (11) est accouplé par transmission de force, au moins pendant un cycle de liage, à l'entraînement (40).

8. Dispositif de liage selon la revendication 7, **caractérisé en ce que** le mécanisme d'accouplement (24) présente un chemin incurvé (25) relié de manière solidaire en rotation à l'arbre de commande (20) ainsi qu'un élément de palpage (30) pouvant être dévié par le chemin incurvé (25) par rapport au cadre (2) et dont la déviation peut faire varier la force de freinage (F).

9. Dispositif de liage selon la revendication 8, **caractérisé en ce que** l'élément de palpage (30) est accouplé à une soupape hydraulique (32) par laquelle le dispositif de freinage (15) peut être actionné.

10. Dispositif de liage selon l'une des revendications 2 à 9,
**caractérisé en ce qu'**une pression hydraulique permettant d'actionner le dispositif de freinage (15) augmente lorsque la vitesse d'entraînement (n) augmente.

11. Dispositif de liage selon l'une des revendications précédentes,
**caractérisé en ce que** le dispositif de freinage (15) présente un frein à disque (16), comportant un étrier de frein (18) suspendu au cadre (2) et comportant un disque de frein (17) qui est accouplé par transmission de force au bras oscillant à aiguilles (11).

12. Dispositif de liage selon la revendication 11, **caractérisé en ce qu'**une garniture de frein disposée sur l'étrier de frein (18) est mobile par rapport au cadre (2) avec au moins un degré de liberté.

13. Presse à balles (1), comportant un dispositif de liage (10) selon l'une des revendications précédentes.
